# EUROPÄISCHE PATENTSCHRIFT

(11) **EP 2 707 998 B1**
(45) Veröffentlichungstag und Bekanntmachung des Hinweises auf die Patenterteilung: **09.12.2015**
(21) Anmeldenummer: 12719601.2
(22) Anmeldetag: 07.05.2012
(51) Int. Cl.: H04L 12/40, H04L 29/08

(54) **KRAFTWAGEN MIT ZWEI ELEKTRONISCHEN KOMPONENTEN ZUM BEREITSTELLEN EINER FUNKTION DES KRAFTWAGENS UND ZUGEHÖRIGES BETRIEBSVERFAHREN**
MOTOR VEHICLE WITH TWO ELECTRONIC COMPONENTS FOR PROVIDING A FUNCTION OF THE MOTOR VEHICLE, AND CORRESPONDING OPERATING METHOD
VÉHICULE AUTOMOBILE ÉQUIPÉ DE DEUX COMPOSANTS ÉLECTRONIQUES FOURNISSANT UNE FONCTION DU VÉHICULE ET PROCÉDÉ DE FONCTIONNEMENT ASSOCIÉ

(30) Priorität: 12.05.2011 DE 102011101358
(43) Veröffentlichungstag der Anmeldung: 19.03.2014
(73) Patentinhaber: Audi AG, 85045 Ingolstadt (DE)
(72) Erfinder: SCHMITT, Alexander, 85120 Hepberg (DE)
(74) Vertreter: Herbst, Matthias Heinz
(86) Internationale Anmeldenummer: PCT/EP2012/001958
(87) Internationale Veröffentlichungsnummer: WO 2012/152429

(56) Entgegenhaltungen:
- US-A1- 2005 085 953
- US-A1- 2006 218 419
- US-A1- 2008 046 142

## Beschreibung

Die Erfindung betrifft einen Kraftwagen mit einer ersten und einer zweiten elektronischen Komponente, die beide dazu ausgelegt sind, eine Funktion bereitzustellen, die einen Betrieb des Kraftwagens betrifft. Zu der Erfindung gehört auch ein Verfahren zum Betreiben des Kraftwagens.

Bei einem Kraftwagen können Funktionen, wie etwa eine Unterstützung bei der Navigation oder auch das Steuern eines Motors eines Fensterhebers oder das Steuern eines Blinkers, durch Steuergeräte bereitgestellt sein. Oft ist dabei ein Steuergerät für das Bereitstellen von mehr als nur einer einzelnen Funktion zuständig. Während eines Betriebes des Kraftwagens, also in der Regel während einer Fahrt, muss dabei stets sichergestellt sein, dass eine einmal in Anspruch genommene Funktion von dem Steuergerät auch vollständig bis zum Ende ausgeführt werden kann. So muss z. B. ein einmal begonnener Vorgang des Verfahrens einer Fensterscheibe auch zuende geführt werden. Allgemein gesprochen darf der Vorgang des Ausführens der Funktion nicht einfach unterbrochen werden.

Deshalb muss das entsprechende Steuergerät Leistungsfähig genug sein, um alle ihm zugeordneten Funktionen so ausführen zu können, dass sie sich nicht bei gleichzeitiger Ausführung gegenseitig stören, weil etwa eine CPU des Steuergeräts (CPU - central processing unit) Steuerdaten für sämtliche zu einem bestimmten Zeitpunkt ausgeführten Funktionen nicht schnell genug erzeugen kann. Notfalls muss eine Funktion zeitweise deaktiviert werden, bevor sie in Anspruch genommen werden kann. Sie steht dann aber in dem Kraftwagen für diesen Zeitraum nicht mehr zur Verfügung.

In einigen Situationen kann es vorkommen, dass besonders viele der Funktionen zugleich ausgeführt werden müssen. Deshalb ist es wünschenswert, die einzelnen Funktionen auf möglichst viele verschiedene Steuergeräte aufzuteilen. Dann ist die Gefahr gering, dass es zu einer Überlastung eines der Steuergeräte kommt.

Dem steht entgegen, dass in anderen Situationen nur wenige Funktionen benötigt werden. Um einen Energieverbrauch des Kraftwagens in einer solchen Situation zu senken, werden dann einzelne Steuergeräte deaktiviert. Dies ist aber nur möglich, wenn die wenigen noch benötigten Funktionen auf einer entsprechend kleinen Gruppe von Steuergeräten zusammengefasst sind.

Schließlich kann es vorkommen, dass nicht immer alle Steuergeräte einsatzbereit sind. So benötigen einige Typen von Steuergeräten während eines Starts des Kraftwagens einige Zeit, um selbst eine Betriebssoftware in einen internen Speicher zu laden oder einen Selbsttest durchzuführen. Diesen Geräten darf dann keine während des Starts des Kraftwagens benötigte Funktionalität zugeordnet sein.

Um in all diesen Situationen dem Benutzer die jeweils benötigten Funktionen bereitstellen zu können, ist bei deren Aufteilung auf die Steuergeräte eine aufwändige Planung nötig, bei welcher dann möglichst viele der besonders kritischen Situationen berücksichtigt werden.

Im Zusammenhang mit einem Ausfall einzelner Steuergeräte aufgrund eines Defektes ist in der DE 10 2007 060 649 A1 ein Kraftwagen beschrieben, bei dem einzelne Sensoren über einen Sensorbus und Aktuatoren über einen Aktuatorbus jeweils mit mindestens zwei Steuergeräten verbunden sind. Kommt es zu einem Ausfall eines der Steuergeräte, so können Sensordaten über den Sensorbus auch durch das zweite, noch funktionstüchtige Steuergerät empfangen werden. Genauso kann auch das zweite Steuergerät über den Aktuatorbus Steuerdaten an die Aktuatoren senden. Durch die Busse ist ein Verdrahtungsaufwand verringert.

In der US 2005/0085953 A1 ist ein Kraftfahrzeug mit einem Steuergerät beschrieben, welches einen Prozessor aufweist, durch welchen eine Steuerfunktion des Kraftfahrzeugs bereitgestellt ist. An das Kraftfahrzeug lässt sich ein weiterer Prozessor anschließen, der beispielsweise Bestandteil eines Mobiltelefons, eines PDA (Personal Digital Assistant) oder eines Laptops sein kann. Nachdem das externe Gerät angeschlossen ist, können Steuer funktionen des Kraftwagens auch durch diesen externen Prozessor ausgeführt werden.

Die US 2006/0218419 A1 betrifft ein Computernetzwerk, wie es beispielsweise in einem Haus installiert sein kann. Um Strom zu sparen, kann eine Komponente des Netzwerks in einen Stromsparmodus geschaltet werden. Falls das Gerät, das abgeschaltet werden soll, eine Netzwerk-Verwaltungsfunktion ausführt, so wird diese Funktion an ein anderes Gerät übertragen.

Es ist Aufgabe der vorliegenden Erfindung, die Planung für die Aufteilung der Funktionen zu vereinfachen und dabei die Verfügbarkeit einzelner Funktionen eines Kraftwagens bei dessen Betrieb zu erhalten.

Der erfindungsgemäße Kraftwagen weist eine erste und eine zweite elektronischen Komponente auf, die beide dazu ausgelegt sind, dieselbe einen Betrieb des Kraftwagens betreffende Funktion bereitzustellen. So kann es also in dem Kraftwagen z.B. zwei Steuergeräte geben, die beide dazu ausgelegt sind, einen bestimmten Motor eines Fensterhebers des Kraftwagens zu steuern.

Der erfindungsgemäße Kraftwagen ist dabei dazu ausgelegt, zwischen den elektronischen Komponenten umzuschalten, so dass die Funktion während eines Betreibens des Kraftwagens, also z.B. während einer Fahrt, zunächst durch die erste elektronische Komponente und nach dem Umschalten durch die zweite elektronische Komponente bereitgestellt ist.

Bei dem erfindungsgemäßen Kraftwagen ergibt sich der Vorteil, dass die Aufteilung der Funktionen auf die einzelnen elektronischen Komponenten während des Betriebes des Kraftwagens verändert werden kann. Dadurch kann auf die weiter oben beschriebenen unterschiedlichen Situationen flexibel reagiert werden: Je nach bedarf können die Funktionen auf eine große Zahl unterschiedlicher elektronischer Komponenten aufgeteilt oder aber mehrere Funktionen auf einer elektronischen Komponente zusammengefasst werden. Insbesondere ist es nur noch selten nötig, einzelnen Funktionen vorübergehend zu deaktivieren, um eine elektronische Komponente zu entlasten.

Bei den elektronischen Komponenten des erfindungsgemäßen Kraftwagens muss es sich nicht um vollständige Steuergeräte handeln. Insbesondere im Zusammenhang mit Funktionen, bei denen eine Reaktion eines Steuergeräts auf ein Signal in besonders kurzer Zeit erfolgen muss (so genannten zeitkritischen Anwendungen oder Echtzeitanwendungen), werden Funktionen durch speziell dafür reservierte Prozessorkerne einer CPU innerhalb eines Steuergeräts bereitgestellt. Die Erfindung betrifft auch das Aufteilen von Funktionen auf einzelne solcher Prozessorkerne.

Gemäß dem erfindungsgemäßen Verfahren erfolgt das Umschalten in Abhängigkeit von einem vorbestimmten Kriterium, d. h. die Funktion wird in dem Kraftwagen zunächst mittels der ersten elektronischen Komponente bereitgestellt und, falls das Kriterium erfüllt ist, mittels der zweiten elektronischen Komponente. So kann beispielsweise als Kriterium vorgegeben sein, dass ein bestimmtes Steuergerät zunächst eine Startphase beendet haben muss. Anschließend kann dann die Funktion gemäß dem erfindungsgemäßen Verfahren auf dieses Steuergerät verlagert werden. Mit einer Startphase ist hier derjenige Zeitabschnitt gemeint, der mit einem Bereitstellen einer Betriebsspannung für die zweite elektronische Komponenten beginnt (also meistens mit dem Drehen eines Zündschlüssels im Zündschloss) und während welcher die zweite elektronische Komponente einen Startprozess durchführt, wie etwa das Laden eines Betriebssystems oder das Durchführen eines Selbsttests. Nachdem die zweite elektronische Komponente dann einsatzbereit ist, können entweder zur Entlastung der ersten elektronischen Komponente nur einzelne Funktionen auf die zweite elektronische Komponente verlagert werden oder aber sämtliche Funktionen von der ersten Komponente weg verlagert werden. Dann kann die erste Komponente sogar zum Einsparen von Energie deaktiviert werden. Dazu kann die erste elektronische Komponente oder ein Teil eines Stromversorgungsnetzes, durch welches die erste elektronische Komponente mit elektrischer Energie versorgt wird, abgeschaltet werden.

Ein anderes Kriterium kann darin bestehen, eine momentane Auslastung der ersten elektronischen Komponente und/oder diejenige der zweiten Komponente zu überwachen. Falls dabei z. B. erkannt wird, dass die Gefahr einer Überlastung der ersten Komponente besteht, können eine oder mehrere der Funktionen, die durch die erste Komponenten bereitgestellt sind, auf die zweite Komponente verlagert Werden.

Bei einer vorteilhaften Weiterbildung des erfindungsgemäßen Kraftwagens ist die erste elektronische Komponente dazu ausgelegt, einen Zustand, in welchem sie sich während eines Vorgangs des Ausführens der Funktion befindet, anhand von Zustandsdaten zu beschreiben. So kann beispielsweise durch die Zustandsdaten während des Verfahrens eines Fensters angegeben sein, wie weit das Fenster bereits verfahren worden ist. Als weiteres Beispiel kann bei einer Navigationsassistenzeinrichtung in ähnlicher Weise durch die Zustandsdaten angegeben sein, welches Bedienmenü einem Benutzer gerade angezeigt wird.

Die Zustandsdaten sind bei dieser Weiterbildung des erfindungsgemäßen Kraftwagens von der ersten zur zweiten elektronischen Komponente übertragbar. Des Weiteren ist die zweite elektronische Komponente dazu ausgelegt, den durch die Zustandsdaten beschriebenen Zustand einzunehmen. Nach dem Umschalten wird die Funktion dann durch die zweiten Komponente ausgehend von diesem Zustand weiter ausgeführt. Wird also bei den obigen Beispielen während des Verfahrens eines Fensters oder während der Bedienung der Navigationsassistenzeinrichtung zwischen den elektronischen Komponenten umgeschaltet, kann die zweite Komponente dort weitermachen, wo die erste aufgehört hat. Hierdurch ist eine unterbrechungsfreie Nutzung der Funktion auch bei einem Wechsel zwischen den beiden Komponenten ermöglicht. Es muss mit dem Umschalten nicht solange gewartet werden, bis die erste elektronische Komponente die Funktion fertig ausgeführt hat.

Einige Funktionen werden nicht unmittelbar durch einen Benutzer des Kraftwagens genutzt. Im Zusammenhang mit der Erfindung sind auch Funktionen gemeint, welche durch andere Geräte des Kraftwagens genutzt werden. Diese können dazu Kommunikationsdaten über einen Datenbus zur ersten elektronischen Komponente senden, um beispielsweise von dieser Informationen über eine aktuelle Drehzahl eines Motors des Kraftwagens zu erhalten. Hierbei ergibt sich ein Vorteil, wenn solche Kommunikationsdaten nach dem Umschalten zu der zweiten elektronischen Komponente umgeleitet werden. Dann ist es nicht nötig, das Gerät, das die Funktion nutzen soll, dahingehend anzupassen, dass es die Daten von sich aus an die gerade aktive Komponente sendet. Es können damit in vorteilhafter Weise herkömmliche Geräte in dem erfindungsgemäßen Kraftwagen verwendet werden.

Bei der Erfindung geht es nicht darum, einen Ausfall eines Steuergeräts aufgrund eines Defekts zu kompensieren. Das Umschalten kann unabhängig von einer Funktionstüchtigkeit der ersten Komponente erfolgen. Insbesondere ist der erfindungsgemäße Kraftwagen gemäß einer vorteilhaften Weiterbildung dazu ausgelegt, während des Betriebs in Abhängigkeit von einem vorbestimmten weiteren Kriterium von der zweiten elektronischen Komponente zurück zur ersten elektronischen Komponente umzuschalten, so dass die Funktion danach wieder durch die erste elektronische Komponente bereitgestellt ist. Als Kriterium für das Zurückverlagern kann beispielsweise ein Optimierungskriterium für eine Verteilung einer Rechenlast auf die einzelnen elektronischen Komponenten vorgegeben werden. Indem zum Bereitstellen der Funktion wahlweise zwischen den elektronischen Komponenten gewechselt werden kann, ergibt sich eine besonders große Flexibilität bei der Planung für die Aufteilung der Funktionen.

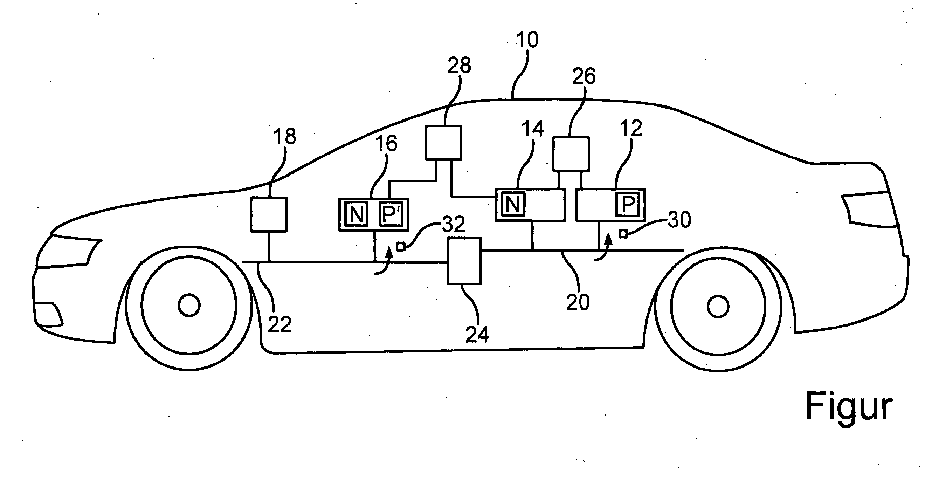

Die Erfindung wird im Folgenden anhand eines Ausführungsbeispiels näher erläutert. Dazu zeigt die einzige Figur eine schematische Darstellung eines Personenkraftwagens gemäß einer Ausführungsform des erfindungsgemäßen Kraftwagens.

In der Figur ist ein Personenkraftwagen 10 gezeigt. Darin sind ein Bordcomputer 12, ein Navigationsgerät 14, ein Infotainmentsystem 16 und ein Motorsteuergerät 18 eingebaut.

Der Bordcomputer 12 und das Navigationsgerät 14 sind an einen Datenbus 20 angeschlossen. Das Infotainmentsystem 16 und das Motorsteuergerät 18 können über ein Kommunikationsnetzwerk 22 Daten austauschen. Zwischen dem Kommunikationsnetzwerk 22 und dem Datenbus 20 können Daten über ein Gateway 24 ausgetauscht werden. Bei dem Datenbus 20 und bei Komponenten des Kommunikationsnetzwerks 22 kann es sich z.B. um einen CAN-Bus (CAN - Controller Area Network), einen LIN-Bus (LIN - Local Interconnect Network), einen FlexRay-Bus, einen MOST-Bus (MOST Media Oriented Systems Transport) oder einen auf einer Ethernet-Technologie basierenden Bus handeln.

Der Bordcomputer 12 und das Navigationsgerät 14 können über eine Schalteinrichtung 26 an- und abgeschaltet werden.

In dem Bordcomputer 12 wird ein Programm P ausgeführt, durch welches ein momentaner und ein durchschnittlicher Kraftstoffverbrauch eines Motors des Kraftwagens berechnet werden.

Sowohl das Navigationsgerät 14 als auch das Infotainmentsystem 16 sind mit einem in der Figur nicht dargestellten GPS-Empfänger (GPS - Global positioning system) verbunden. Das Navigationsgerät 14 und das Infotainmentsystem 16 sind beide dazu ausgebildet, anhand von Positionsdaten des GPS-Empfängers und anhand von Kartendaten, die in einer (nicht dargestellten) Datenbank gespeichert sind, einem Fahrer des Personenkraftwagens 10 eine Fahrtroute auf einem Bildschirm 28 anzuzeigen.

Das Motorsteuergerät 18 steuert elektrische und elektronische Elemente des Motors. Um diesen Steuerprozess zu optimieren, benötigt das Motorsteuergerät in dem Beispiel Informationen über einen momentanen und einen durchschnittlichen Kraftstoffverbrauch des Motors.

Die beschriebene Navigationsassistenz und die Berechnung des Kraftstoffverbrauchs sind Funktionen, die bei dem Personenkraftwagen 10 des Beispiels sowohl von dem Navigationsgerät 14 bzw. dem Bordcomputer 12 als auch dem Infotainmentsystem 16 bereitgestellt sind.

Bei einem Start des Personenkraftwagens 10, wenn ein Benutzer einen Zündschlüssel in einem Zündschloss des Personenkraftwagens 10 dreht und daraufhin die Geräte 12 bis 18 mit Strom versorgt werden, sind der Bordcomputer 12, das Navigationsgerät 14 und das Motorsteuergerät 18 nach kurzer Zeit einsatzbereit.

Durch das auf dem Bordcomputer 12 ausgeführte Programm P können von dem Motorsteuergerät 18 hier Daten über den momentanen Kraftstoffverbrauch des Motors angefordert werden. Dazu sendet das Motorsteuergerät 18 Anfragedaten 30 über das Kommunikationsnetz 22 und den Datenbus 20 an eine Bus-Adresse des Bordcomputers 12. Dieser sendet daraufhin die angefragten Daten an das Motorsteuergerät 18 zurück.

Durch das Navigationsgerät 14 wird unmittelbar nach dem Start des Personenkraftwagens 10 auf dem Bildschirm 28 ein Menü angezeigt. Der Benutzer des Personenkraftwagens 10 kann in dem Menü ein Navigationsziel auswählen.

Das Infotainmentsystem 16 benötigt nach dem Start des Personenkraftwagens 10 mehr Zeit als die übrigen Geräte, um die von ihm bereitgestellten Funktionen ausführen zu können. Zunächst muss das Infotainmentsystem 16 in einer Startphase ein Betriebssystem in einen Speicher laden. Nach dieser Start- oder Ladephase sendet das Infotainmentsystem 16 ein Bereitschaftssignal an den Bordcomputer 12. Dieser hält daraufhin das Programm P zur Berechnung des Kraftstoffverbrauchs an. Anschließend überträgt der Bordcomputer 12 Daten eines Speicherabbildes P' des angehaltenen Programms P über den Datenbus 20 und das Kommunikationsnetzwerk 16 zu dem Infotainmentsystem 16. Dieses speichert das Speicherabbild P' in einem Bereich seines Speichers und führt das Programm weiter aus.

Von diesem Zeitpunkt an werden weitere Anfragedaten 32 des Motorsteuergeräts 18, die an den Bordcomputer 12 adressiert sind, zu dem Infotainmentsystem 16 umgeleitet. Das auf dem Infotainmentsystem 16 weiter ausgeführte Programm zur Berechnung des Kraftstoffverbrauchs erzeugt weiterhin die von dem Motorsteuergerät 18 benötigten Antwortdaten und sendet diese an das Motorsteuergerät 18 zurück. Die Umleitung der Anfragedaten 32 kann beispielsweise durch das Gateway 24 bewirkt werden. Dazu kann vorgesehen sein, dass diesem von dem Infotainmentsystem 16 oder dem Bordcomputer 12 ein entsprechendes Signal zugesendet wird.

Der Benutzer des Personenkraftwagens 10 hat unmittelbar nach dem Starten des Personenkraftwagens 10 aus dem auf dem Bildschirm 28 angezeigten Menü ein Navigationsziel ausgewählt. Das Navigationsgerät 14 hat die Berechnung einer entsprechenden Fahrtroute auch bereits durchgeführt. Nachdem das Infotainmentsystem 16 seine Startphase beendet hat, signalisiert es auch dem Navigationsgerät 14 seine Einsatzbereitschaft. Das Navigationsgerät 14 überträgt daraufhin Navigationsdaten N betreffend das Navigationsziel und die berechnete Route an das Infotainmentsystem 16. Dieses erzeugt daraufhin zu der berechneten Route auf dem Bildschirm 28 entsprechende Fahrhinweise.

Nachdem das Infotainmentsystem 16 die Funktionen sowohl des Bordcomputers 12 als auch des Navigationsgeräts 14 übernommen hat, werden diese beiden Geräte 12, 14 durch die Schalteinrichtung 26 abgeschaltet. Hierdurch sinkt ein Energieverbrauch des Personenkraftwagens 10.

Falls der Benutzer weitere Funktionen des Infotainmentsystems 16 in Anspruch nimmt, wie zum Beispiel Telephonie oder das Abspielen eines Filmes, können das Navigationsgerät 14 und der Bordcomputer 12 wieder aktiviert werden und die Navigationsdaten N und ein Speicherabbild des Programms zum Berechnen des Kraftstoffverbrauchs wieder zurück an diese übertragen werden. Hierdurch wird das Infotainmentsystem 16 entlastet und es kann die neu angeforderten Funktionen ausführen, ohne dass es dabei zu einer gegenseitigen Beeinträchtigung der genutzten Funktionen kommt.

Bei dem Personenkraftwagen 10 kann vorgesehen sein, dass auch weitere Funktionen, wie das Steuern eines Blinkers und eines Scheibenwischers, weitere so genannte Komfortfunktionen (z.B. das Verfahren eines Fensters mittels eines Motor eines Fensterhebers oder das Einstellen eines Sitzes) und sogar sicherheitsrelevante Funktionen jeweils von mehr als einem Steuergerät bereitgestellt werden und zwischen den Steuergeräten in einer der beschriebenen Weisen umgeschaltet wird.

Durch das Beispiel ist gezeigt, wie bei einem Kraftwagen Funktionen während der Laufzeit einzelner Geräte zwischen diesen verlagert werden können. Insbesondere können Funktionen während einer Fahrt von einem anderen Gerät ausgeführt werden als es bei einem Start des Kraftwagens der Fall ist. Hierdurch ist es möglich, nach dem Start Geräte in Teilnetzen, wie z.B. die an dem Datenbus 20 angeschlossenen Geräte, abzuschalten.

## Patentansprüche

1. Kraftwagen (10) mit einer ersten und einer zweiten elektronischen Komponente (12, 14, 16), die beide dazu ausgelegt sind, dieselbe einen Betrieb des Kraftwagens betreffende Funktion bereitzustellen,
**dadurch gekennzeichnet, dass**
der Kraftwagen (10) dazu ausgelegt ist, die Funktion im Verlauf des Betriebs zunächst mittels der ersten elektronischen Komponente (12, 14) bereitzustellen und in Abhängigkeit von einem vorbestimmten Kriterium, unabhängig von einer Funktionstüchtigkeit der ersten Komponente während des Betriebes zwischen den elektronischen Komponenten (12, 14, 16) umzuschalten, so dass die Funktion danach durch die zweite elektronische Komponente (16) bereitgestellt ist, wobei
der Kraftwagen (10) dazu ausgelegt ist, im Betrieb in Abhängigkeit von einem vorbestimmten weiteren Kriterium von der zweiten elektronischen Komponente (16) zurück zur ersten elektronischen Komponente (12, 14) umzuschalten, so dass die Funktion danach wieder durch die erste elektronische Komponente (12, 14) bereitgestellt ist.

2. Kraftwagen (10) nach Anspruch 1, bei welchem die erste elektronische Komponente (12, 14) dazu ausgelegt ist, einen Zustand, in welchem sie sich während eines Vorgangs des Ausführens der Funktion befindet, anhand von Zustandsdaten (N, P') zu beschreiben, und bei welchem die Zustandsdaten (N, P') von der ersten zur zweiten elektronischen Komponente (12, 14, 16) übertragbar sind und bei welchem die zweite elektronische Komponente (16) dazu ausgelegt ist, den durch die Zustandsdaten (N, P') beschriebenen Zustand einzunehmen und nach dem Umschalten die Funktion ausgehend von diesem Zustand weiter auszuführen.

3. Kraftwagen (10) nach Anspruch 1 oder 2, welcher dazu ausgelegt ist, Kommunikationsdaten (32), welche ein die Funktion nutzendes Gerät (18) des Kraftwagens (10) über einen Datenbus (22) an das erste elektronische Gerät (12) sendet, nach dem Umschalten zu der zweiten elektronischen Komponente (16) umzuleiten.

4. Kraftwagen (10) nach einem der vorhergehenden Ansprüche, bei welchem die erste elektronische Komponente (12, 14) während des Betriebs des Kraftwagens (10) durch ein Steuersignal abschaltbar ist.

5. Kraftwagen (10) nach einem der vorhergehenden Ansprüche, bei welchem zumindest eine der elektronischen Komponenten ein Steuergerät (12, 14, 16) oder einen Prozessorkern einer CPU umfasst.

6. Verfahren zum Betreiben eines Kraftwagens (10) gemäß einem der vorhergehenden Ansprüche, **gekennzeichnet durch** die Schritte:
- Bereitstellen der Funktion mittels der ersten elektronischen Komponente (12, 14, 16),
- falls das Kriterium erfüllt ist, Bereitstellen der Funktion mittels der zweiten elektronischen Komponente (12, 14, 16),
indem die Funktion mittels der ersten elektronischen Komponente (12, 14) in einer Startphase des Kraftwagens (10) bereitgestellt wird, welche mit einem Bereitstellen einer Betriebsspannung für die zweite elektronische Komponenten (16) beginnt und während welcher die zweite elektronische Komponente (16) einen Startprozess durchläuft, und nach einem Beenden der Startphase zur zweiten elektronischen Komponente (16) umgeschaltet wird.

7. Verfahren nach Anspruch 6, bei welchem nach dem Umschalten die erste elektronische Komponente (12, 14) oder ein Teil eines Stromversorgungsnetzes, durch welches die erste elektronische Komponente mit elektrischer Energie versorgt wird, abgeschaltet wird.

## Claims

1. Motor vehicle (10) having a first and a second electronic component (12, 14, 16), both of which are designed to provide the same function concerning operation of the motor vehicle, **characterized in that** the motor vehicle (10) is designed to provide the function, in the course of operation, first by means of the first electronic component (12, 14) and, as a function of a predetermined criterion, regardless of a functional capability of the first component, to switch between the electronic components (12, 14, 16) during operation so that the function is thereafter provided by the second electronic component (16), wherein the motor vehicle (10) is designed to switch back from the second electronic component (16) to the first electronic component (12, 14) during operation, as a function of a predetermined further criterion, so that the function is thereafter provided again by the first electronic component (12, 14).

2. Motor vehicle (10) according to claim 1, in which the first electronic component (12, 14) is designed to describe a state, in which state it is in when carrying out the function, on the basis of state data (N, P'); and in which the state data (N, P') can be transmitted from the first to the second electronic component (12, 14, 16) and in which the second electronic component (16) is designed to assume the state described by the state data (N, P') and to further carry out the function, after the switching, starting from this state.

3. Motor vehicle (10) according to claim 1 or 2, which is designed to divert communication data (32), which a device (18) of the motor vehicle (10) using the function transmits to the first electronic device (12) via a data bus (22), to the second electronic component (16) after the switching.

4. Motor vehicle (10) according to any of the preceding claims, in which the first electronic component (12, 14) can be switched off by a control signal during operation of the motor vehicle (10).

5. Motor vehicle (10) according to any of the preceding claims, in which at least one of the electronic components comprises a control device (12, 14, 16) or a processor core of a CPU.

6. Method for operating a motor vehicle (10) according to any of the preceding claims, **characterized by** the steps:
- providing the function by means of the first electronic component (12, 14, 16),
- if the criterion is met, providing the function by means of the second electronic component (12, 14, 16), in that the function is provided by means of the first electronic component (12, 14) in a start phase of the motor vehicle (10), which starts with a provision of an operating voltage for the second electronic component (16) and during which the second electronic component (16) runs through a start process, and is switched to the second electronic component (16) once the start phase is complete.

7. Method according to claim 6, in which, after the switching, the first electronic component (12, 14) or a portion of the power supply network by which the first electronic component is supplied with electrical power is switched off.

## Revendications

1. Véhicule à moteur (10) comprenant un premier et un deuxième composant électronique (12, 14, 16), qui sont tous deux mis au point pour fournir la même fonction concernant un mode de fonctionnement du véhicule à moteur,
**caractérisé en ce**
**que** le véhicule à moteur (10) est mis au point pour fournir la fonction au cours du fonctionnement dans un premier temps au moyen du premier composant électronique (12, 14) et pour procéder, en fonction d'un critère prédéterminé, indépendamment d'un bon état de fonctionnement du premier composant, au cours du fonctionnement, à une commutation telle entre les composants électroniques (12, 14, 16) de sorte que la fonction est par la suite fournie par le deuxième composant électronique (16),
le véhicule à moteur (10) étant mis au point pour, en fonctionnement, en fonction d'un autre critère prédéterminé, procéder à une commutation inverse depuis le deuxième composant électronique (16) vers le premier composant électronique (12, 14) de sorte que la fonction est par la suite à nouveau fournie par le premier composant électronique (12, 14).

2. Véhicule à moteur (10) selon la revendication 1, où le premier composant électronique (12, 14) est mis au point pour décrire à l'aide de données d'état (N, P') un état, dans lequel ledit composant se trouve au cours d'une opération visant à exécuter la fonction, et où les données d'état (N, P') peuvent être transmises du premier au deuxième composant électronique (12, 14, 16), et où le deuxième composant électronique (16) est mis au point pour adopter l'état décrit par les données d'état (N, P') et pour poursuivre l'exécution de la fonction en partant dudit état après la commutation.

3. Véhicule à moteur (10) selon la revendication 1 ou 2, qui est mis au point pour rerouter des données de communication (32), qu'un appareil (18), utilisant la fonction, du véhicule à moteur (10) envoie par l'intermédiaire d'un bus de données (22) au premier appareil électronique (12) après la commutation sur le deuxième composant électronique (16).

4. Véhicule à moteur (10) selon l'une quelconque des revendications précédentes, où le premier composant électronique (12, 14) peut être mis hors service par un signal de commande au cours du fonctionnement du véhicule à moteur (10).

5. Véhicule à moteur (10) selon l'une quelconque des revendications précédentes, où au moins un des composants électroniques inclut un appareil de commande (12, 14, 16) ou un coeur de processeur d'une UCT

6. Procédé servant à faire fonctionner un véhicule à moteur (10) selon l'une quelconque des revendications précédentes, **caractérisé par** les étapes suivantes consistant à :
- fournir la fonction au moyen du premier composant électronique (12, 14, 16) ;
- en cas de respect du critère, fournir la fonction au moyen du deuxième composant électronique (12, 14, 16), en ce que la fonction est fournie au moyen du premier composant électronique (12, 14) lors d'une phase de démarrage du véhicule à moteur (10), qui débute avec une fourniture au deuxième composant électronique (16) d'une tension de fonctionnement et au cours de laquelle le deuxième composant électronique (16) suit un processus de démarrage et en ce qu'elle est commutée sur le deuxième composant électronique (16) à la fin de la phase de démarrage.

7. Procédé selon la revendication 6, où le premier composant électronique (12, 14) ou une partie d'un réseau d'alimentation en courant, lequel permet d'alimenter le premier composant électronique en énergie électrique, est mis/mise hors service après la commutation.
